# EUROPEAN PATENT SPECIFICATION

(11) **EP 1 239 188 B1**
(45) Date of publication and mention of the grant of the patent: **11.01.2006**
(21) Application number: 00937267.3
(22) Date of filing: 15.06.2000
(51) Int. Cl.: F16H 48/00, B60K 17/346, F16H 48/08, F16H 48/10

(54) **COMBINED DIFFERENTIAL GEAR DEVICE**
KOMBINIERTES DIFFERENTIALGETRIEBE
DISPOSITIF A ENGRENAGE DIFFERENTIEL COMBINE

(30) Priority: 17.12.1999 US 172524 P
(43) Date of publication of application: 11.09.2002
(73) Proprietor: Toyoda Machine Works, LTD., Aichi (JP)
(72) Inventor: NISHIJI, Makoto Bosch Autom. Sys. Corp. Kohnan Pl., Ohsato-gun Saitama 360-0193 (JP); NAKAJIMA, Shinichiro Zexel Torsen S.A., 7110 Parc Ind. De Strepy-bracquegnies La (BE)
(74) Representative: Harrison, David Christopher
(86) International application number: PCT/JP2000/003928
(87) International publication number: WO 2001/044691

(56) References cited:
- EP-A- 0 043 806
- EP-A- 0 857 892
- EP-A1- 0 043 806
- DE-A- 3 600 385
- GB-A- 952 861
- JP-A- 11 257 463
- JP-A- 59 057 032
- US-A- 4 207 780
- US-A- 5 176 589
- US-A- 5 902 206

## Description

### Technical Field

This invention relates to a combined differential gear device in which a planetary gear mechanism and a differential gear mechanism are incorporated in a housing, corresponding to the preamble of claims 1 and 8.

### Background Art

A four-wheel drive vehicle having a front transverse engine includes a front differential gear device connected to a front accelerator shaft, a rear differential gear device connected to a rear accelerator shaft, and a sort of coupling for transmitting power from a transmission to the front and rear differential gear devices and absorbing differential rotation between the front and rear differential gear devices. A center differential gear device is a desirable means for normally distributing power to the front differential gear device and to the rear differential gear device. However, the four-wheel drive vehicle having the front transverse engine occasionally does not have a space enough to install a one-input two-output mechanism which is necessary for the center differential gear device.

The closest prior art document

EP-A-857892 discloses a differential gear assembly in which a support shaft is perpendicular to the rotational axis of the housing. Planet gears rotate with the moving and mesh with side gears.

U.S. Pat. No. 5,484,348 discloses a combined differential gear device in which a differential gear mechanism and a planetary gear mechanism are incorporated in a housing. In case this combined differential gear device is applied to a four-wheel drive vehicle having a front transverse engine, the differential gear mechanism is used as a center differential gear device and the planetary gear mechanism is used as a front differential gear device. Therefore, this combined differential gear device can considerably solve the above-mentioned problem in that there is no space enough to install the center differential gear device.

Requirements for an arrangement of a front differential gear device in a front-wheel drive vehicle having a front transverse engine are; height from the ground surface, position in a forward/backward direction for achieving reduction of the overhang weight and an arrangement in a left/right direction between two accelerator shafts. In order to satisfy those requirements as much as possible, a large external chamfering is formed on the housing of the front differential gear device. This large external chamfering is placed in opposing relation to a similar chamfering of a torque converter or clutch. This requirement must also be satisfied in order to accomplish a four-wheel drive vehicle by installing a combined differential gear device in a space for the front differential gear device.

However, the differential gear mechanism of the combined differential gear device disclosed in the above-mentioned U.S. Pat. No. 5,484,348 has a pair of side gears arranged on a rotation axis of a housing. A planetary gear mechanism is disposed within one of the side gears. So, this side gear has a comparatively large diameter. The other side gear also has a large diameter corresponding to the diameter of the first-mentioned side gear. The two side gears, each having a large diameter, are arranged side by side in an axial direction of the housing. Moreover, a pair of planetary gears to be engaged with the corresponding side gears are arranged on an outer periphery side thereof. Unless a large number of such planetary gears are arranged in the circumferential direction, it becomes necessary, in order to obtain a sufficient strength, to increase the tooth-width of each side gear and thus, to increase the tooth-width of each planetary gear. This results in a problem that a large chamfering is difficult to be formed on the housing. Moreover, since a large number of planetary gears become necessary to be used on both the center differential gear device and the front differential gear device, another problem is arisen in which the manufacturing cost is increased.

DE-A-3600385 discloses a differential gear arrangement having a first differential gear and a second differential gear are mounted concentrically in a conmmon housing. Both differential gears are formed as spur gear differentials.

### Disclosure of the Invention

An object of the present invention is to provide a combined differential gear device in which a large chamfering can be formed on a housing.

In order to achieve this object, a first mode of the present invention is set out is claim 1.

In the first mode of the present invention, it is accepted that the planetary gear is rotatably received in a pocket formed in the housing Preferably, bevel gears are used as the element gear and as the side gear, and the element gear is arranged with an axis thereof orthogonal to the rotation axis. It is also preferred that a tapered chamfering is formed on one end portion of the housing.

A second mode of the present invention is set out in claim 8.

In the second mode of the present invention, it is accepted that the planetary gear is rotatably received in a pocket formed in the housing Preferably, bevel gears are used as the element gear and as the side gear, and the element gear is arranged with an axis thereof orthogonal to the rotation axis. Preferably, a tapered chamfering is formed on one end portion of the housing.

In the third mode of the present invention, it is preferred that the pair of planetary gears are rotatably received in pockets, respectively, which are formed in the carrier. However, it is accepted that the pair of planetary gears are rotatably supported on the carrier through a shaft. Preferably, bevel gears are used as the element gear and as the side gear, and the element gear is arranged with an axis thereof orthogonal to the rotation axis. It is also preferred that a tapered chamfering is formed on one end portion of the housing.

A fourth mode of the present invention relates to a combined differential gear device including a hollow housing which is rotation-driven about a rotation axis, and a planetary gear mechanism and a differential gear mechanism which are disposed within the housing, wherein
the planetary gear mechanism includes an inner gear rotatably disposed within the housing with an axis thereof aligned with the rotation axis and rotated in unison with the housing, a sun gear rotatably disposed within the housing with an axis thereof aligned with the rotation axis and with at least a part thereof inserted in the inner gear, a carrier rotatably disposed within the housing with an axis thereof aligned with the rotation axis and connected to the inner gear so as to be rotated in unison therewith, and a pair of planetary gears disposed on the carrier such that the planetary gears are rotatable about their own axes, the planetary gears being capable of revolving about the rotation axis in unison with the carrier, the planetary gears being engaged with each other and also engaged with the inner gear and the sun gear, at least a part of the sun gear inserted in the inner gear being provided with a hollow portion, and wherein
the portion of the carrier inserted in the sun gear is provided with a hollow portion,
the differential gear mechanism includes an element gear disposed within the carrier such that the element gear is rotatable about its own axis,

### Brief Description of Drawings

FIG. 1 is a sectional view taken on line Y-Y of FIG. 2, showing a first embodiment of a first mode of the present invention.
FIG. 2 is a sectional view taken on line X-X of FIG. 1.
FIG. 3 is a plan view showing a schematic construction of a driving system of a vehicle incorporated with the combined differential gear device of FIGS. 1 and 2.
FIG. 4 is a sectional view taken on line Y-Y of FIG.5, showing a first embodiment of a second mode of the present invention.
FIG. 5 is a sectional view taken on line X-X of FIG. 4.

### Best Mode for Carrying Out the Invention

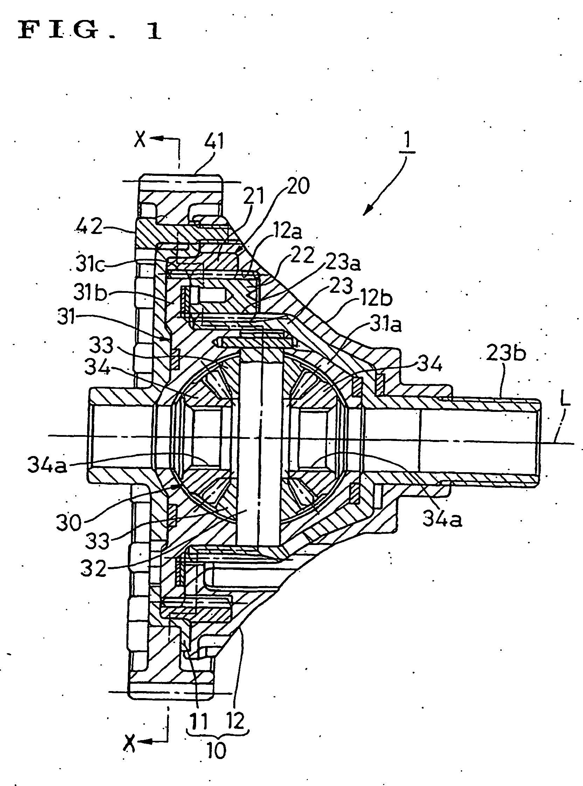

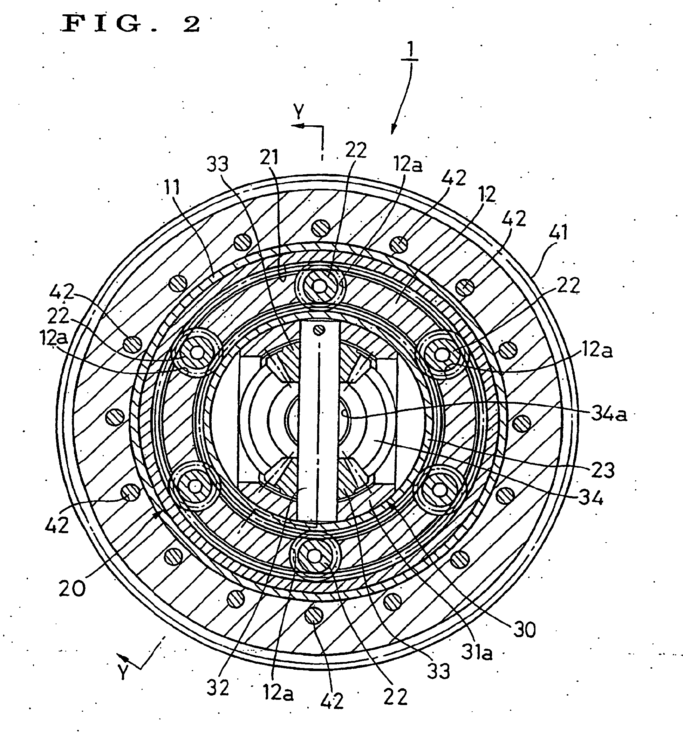

FIGS. 1 through 3 show a first embodiment of a first mode of the present invention. A combined differential gear device 1 according to this embodiment includes a housing 10 which is rotation-driven about a rotation axis L, and a planetary gear mechanism 20 and a differential gear mechanism 30 which are incorporated in this housing 10.

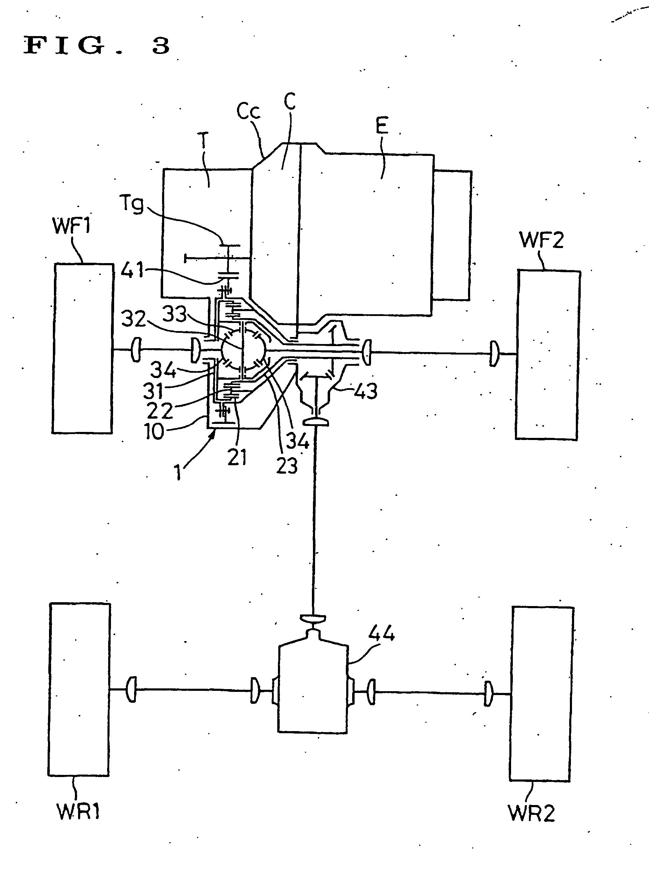

The housing 10 has two housing component bodies 11, 12. The housing component bodies 11, 12 are arranged in the direction of the rotation axis L in such a manner as to be mutually opposing relation and fixed to each other by a bolt 42. An input gear 41 is fixed to an outer periphery of the housing component body 11 by the bolt 42. As shown in FIG. 3, this input gear 41 is rotation-driven by an output gear Tg of a transmission T. By this, the housing 10 is rotated about the rotation axis L.

The planetary gear mechanism 20 includes an inner gear 21, a planetary gear 22 and a sun gear 23. The inner gear 21 is rotatably disposed within the housing 10 with an axis thereof aligned with the rotation axis L.

The planetary gear 22 is arranged within the housing 10 with an axis thereof in parallel relation to the rotation axis L. At least one such planetary gear is used. In this embodiment, a plurality of planetary gears 22 are used. Those planetary gears 22 are arranged at equal intervals in the circumferential direction of the housing 10. The planetary gears 22 are rotatably received in pockets 12a formed in the housing component body 12. Accordingly, the planetary gears 22 are revolved about the rotation axis L together with the housing 10. Each planetary gear 22 can also rotate about its own axis. The planetary gears 22 are engaged with the inner gear 21.

A sun gear 23 is formed in a cylindrical configuration. The sun gear 23 is rotatably disposed within the housing 10 with an axis thereof aligned with the rotation axis L. One end portion (left end portion in FIG. 1) of the sun gear 23 is inserted in the inner gear 21. An outer gear portion 23a is formed on an outer periphery of one end portion of the sun gear 23. This outer gear portion 23a is engaged with the planetary gear 22. Accordingly, when the planetary gear 22 is not rotated about its own axis, the sun gear 23 is rotated at an equal speed in unison with the inner gear 21. On the other hand, when the planetary gear 22 is rotated about its own axis, the sun gear 23 is rotated at a high speed or low speed in accordance with the speed of rotation of the planetary gear 22 with respect to the inner gear 21. Whether the sun gear 23 is rotated at a high speed or at a low speed depends on the relation between the revolving direction and the rotating direction of the planetary gear 22. At the time the planetary gear 22 is rotated about its own axis, a friction resistance is generated between an outer peripheral surface of the planetary gear 22 and an inner peripheral surface of the pocket 12a. Consequently, differential rotation between the inner gear 21 and the sun gear 23 is limited by an amount equal to the friction resistance, and a magnitude of torque corresponding to the friction resistance is transmitted from the sun gear 23 or inner gear 21 which is rotated at a high speed to the inner gear 21 or sun gear 23 which is rotated at a low speed. The other end portion of the sun gear 23 is projected outside from the housing component body 12. A spline 23b is formed on the other end portion of the sun gear 23. This spline 23b is connected with a rear differential gear device 44 through a rotation transmitting mechanism 43, as later described.

The differential gear mechanism 30 includes a casing 31. This casing 31 is rotatably received within the housing 10 with an axis thereof aligned with the rotation axis L. The casing 31 includes a hollow cylindrical receiving portion 31a and a disc portion 31b. The receiving portion 31a is rotatably received in the sun gear 23 with a radius of curvature thereof aligned with the rotation axis L. The disc portion 31b is projected outside from the sun gear 23 with an axis thereof aligned with the rotation axis L. A gear portion 31c is formed on an outer periphery of the disc portion 31b. This gear portion 31c is engaged with the inner gear 21. The gear portion 31c and the inner gear 21 are engaged with each other in a sort of spline fitting fashion. Accordingly, the casing 31 is rotated in unison with the inner gear 21.

A support shaft 32 orthogonal to the rotation shaft L is fixed to a central area of the receiving portion 31a. Element gears 33, 33 are rotatably supported on opposite end portions of the support shaft 32 within the receiving portion 31a. Accordingly, each element gear 33 can revolve about the rotation axis L and can also rotate about the support shaft 32. Although a plurality of element gears 33 are used, only one may be used. Although a bevel gear is used as the element gear 33, a spur gear or helical gear may be used as in the known parallel differential gear device. In that case, the spur gear or helical gear is arranged in parallel relation to the rotation axis L.

A pair of side gears 34, 34 are rotatably received in the receiving portion 31a with their axes aligned with the rotation axis L. Each side gear 34 is engaged with the element gears 33. Accordingly, when the element gear 33 is not rotated about its own axis in the event the casing 31 is rotated together with the inner gear 21, the pair of side gears 34, 34 are rotated at an equal speed. On the other hand, when the element gear 33 is rotated about its own axis, the pair of side gears 34, 34 are rotated at mutually different speed. A spline hole 34a is formed in a central area of each side gear 34. Left and right front wheels WF1, WF2, as later described, are connected to the corresponding spline holes 34a, 34a.

A chamfering 12b about the rotation axis L is formed on an outer surface of the housing component body 12. This chamfering 12b is dimensioned large enough to install the combined differential gear device 1 on a front wheel drive vehicle having a transverse engine without any problem. That is, in this combined differential gear device 1, since the differential gear mechanism 30 is incorporated in the sun gear 23, the sun gear 23 becomes comparatively large in diameter. The inner gear 21 also becomes large in diameter corresponding to this. However, the inner gear 21 and the sun gear 23 are arranged on the outer side and on the inner side in a radial direction of the housing 10 and are not arranged side by side in the direction of the rotation axis L. Accordingly, the width dimension of an outer periphery side portion of the housing 10 can be reduced in the direction of the rotation axis L. Although the two side gears 34, 34 of the differential gear mechanism 30 are arranged side by side in the direction of the rotation axis L, the outside diameter of each side gear 34 is small. Accordingly, the width dimension of the outer periphery side portion of the housing 10 does not become large in the direction of the rotation axis L by receiving the two side gears 34, 34 in the housing 10, although the width of the inner periphery side of the housing 10 becomes large in the direction of the rotation axis L. As discussed, the width dimension of the housing 10 in the direction of the rotation axis L can be reduced on the outer periphery side, although the width dimension is increased on the inner periphery side. Accordingly, a large chamfering 12b can be formed on the housing 10.

As shown in FIG. 3, the combined differential gear device 1 is attached to a vehicle (not shown) with its chamfering 12b placed in opposing relation to a chamfering Cc of the torque converter or clutch C. The sun gear 23 of the planetary gear mechanism 20 is connected to the rear differential gear device 44 through the rotation transmitting mechanism 43 and then connected to left and right rear wheels WR1, WR2 from the rear differential gear device 44. The pair of side gears 34, 34 of the differential gear mechanism 30 are connected to the left and right front wheels WF1, WF2, respectively. Accordingly, a part of a rotation torque of an engine E transmitted to the combined differential gear device 1 through the torque converter or clutch C, an output gear Tg of the transmission T and an input gear 41 is transmitted to the left and right rear wheels WR1, WR2 through the planetary gear 22, the sun gear 23, the rotation transmitting mechanism 43 and the rear differential gear device 44. A part of the remaining rotation torque of the engine E is transmitted to the left and right front wheels WF1, WF2 through the planetary gear 22, the inner gear 21, the casing 31, the support shaft 32, the element gear 33 and the side gears 34, 34.

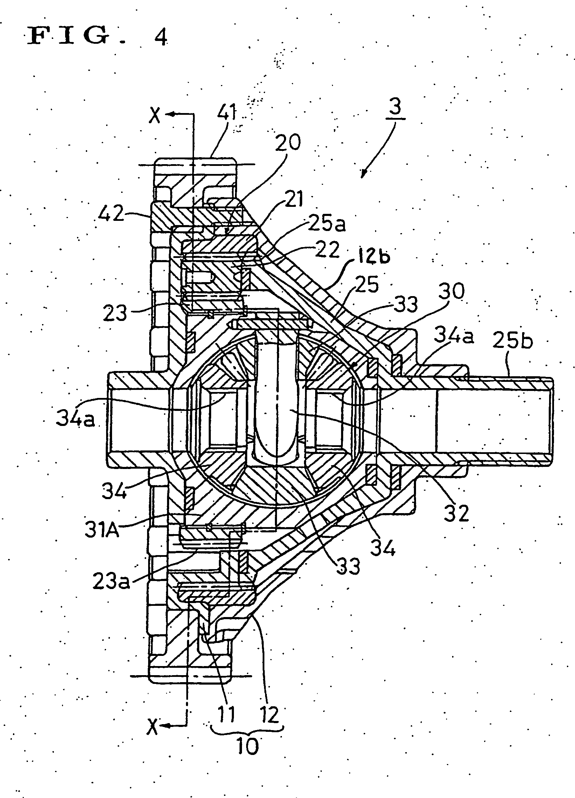

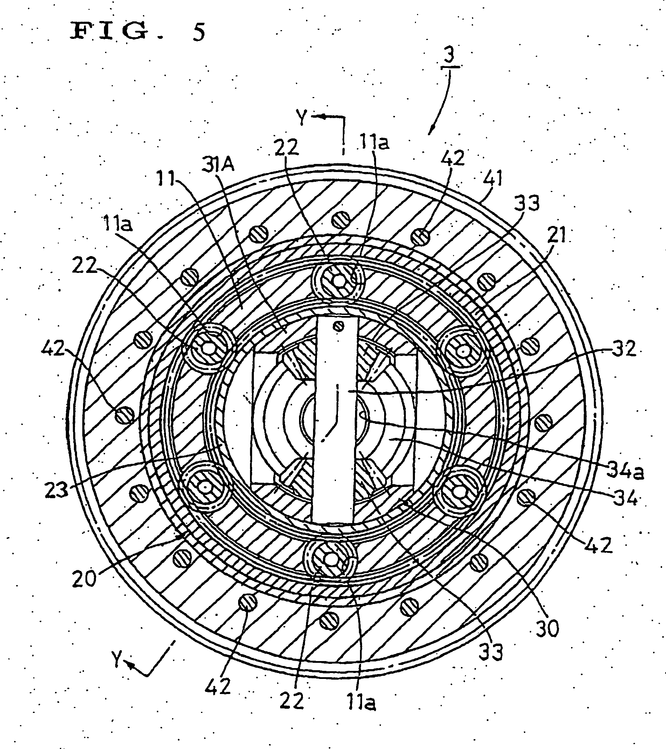

FIGS. 4 and 5 show one embodiment of a second form of the present invention. In a combined differential gear device 3 according to this embodiment, a cylindrical rotation transmitting member 25 is rotatably disposed within a housing 10 with its axis aligned with a rotation axis L. A gear portion 25a is formed on one end portion of this rotation transmitting member 25. The gear portion 25a is engaged with an inner gear 21 in a spline fitting fashion. Accordingly, the rotation transmitting member 25 is rotated in unison with the inner gear 21. The other end portion of the rotation transmitting member 25 is projected outside from the housing 10. A spline portion 25b, instead of the spline portion 23b of the sun gear 23 in the above-mentioned embodiment, is formed on the projected part of the rotation transmitting member 25. This spline portion 25b is connected with a rear differential gear device 44 through a rotation transmitting mechanism 43.

A pocket 11a, instead of the pocket 12a formed in the housing component body 12 of the above-mentioned embodiment, is formed in the housing component body 11. A planetary gear 22 is rotatably received in this pocket 11a. It is accepted that the housing component body 11 is provided with a shaft extending in parallel relation to the rotation axis L and the planetary gear 22 is disposed on this shaft.

The sun gear 23 is formed as a ring gear having an outer gear portion 23a. A casing 31A, instead of the casing 31, is non-rotatably connected, by means of spline fitting or the like, to an inner periphery of the sun gear 23. A pair of element gears 33, 33 and a pair of side gears 34, 34 are received in the casing 31A in the same manner as in the above-mentioned embodiment. All the remaining construction is same as the above-mentioned combined differential gear device 1. 25a is arranged more on an outer periphery side of the carrier 25 than the other pocket 25b and open to the outer periphery of the carrier 25. The other pocket 25b is open to an inner periphery of the carrier 25. The other end portion of the carrier 25 is projected outside from a housing component body 13, and a spline 25c is formed on this projected part. The spline 25c is connected with a rear differential gear device through a rotation transmitting device 43.

Planetary gears 26, 27 are rotatably inserted in the pockets 25a, 25b, respectively. Accordingly, the planetary gears 26, 27 can be revolved about the rotation axis L together with the carrier 25 and can also be rotated about their own axes. The two planetary gears 26, 27 are engaged with each other. The planetary gear 26 is engaged with the inner gear 21, and the other planetary gear 27 is engaged with the sun gear 23. Accordingly, when the planetary gears 26, 27 are not rotated about their own axes, the carrier 25 and the sun gear 23 are rotated at an equal speed in unison with the housing 10. When the planetary gears 26, 27 are rotated about their own axes, the carrier 25 and the sun gear 23 make a differential rotation. The differential rotation between the carrier 25 and the sun gear 23 is limited by an amount equal to the friction resistance generated between each outer peripheral surface of the planetary gears 26, 27 and each inner peripheral surface of the pockets 25a, 25b. The amount of differential limitation becomes larger than that in the combined differential gear device 1 by a portion resulting from employment of two planetary gears 26, 27.

A spherical receiving chamber 35 is defined by an inner peripheral surface of the sun gear 23 and an inner peripheral surface of the carrier 25. The center of curvature of the inner surface of this receiving chamber 35 is located on the rotation axis L. The element gears 33, 33 and the side gears 34, 34 are arranged in the receiving chamber 35. The element gears 33, 33 are rotatably supported on a support shaft 32 disposed at the sun gear 23.

### Industrial Applicability

A combined differential gear device according to the present invention is not only used as a center and a rear differential gear device of a four-wheel drive vehicle having a front transverse engine but also used as a center and a rear differential gear device of a four-wheel drive vehicle having a rear transverse engine.

## Claims

1. A combined differential gear device comprising:
a hollow housing (10) composed of a first housing component body (11) and a second housing component body (12), said housing (10) being configured to be rotationally driven about a rotational axis (L) by a rotational force from an engine (E);
a sun gear (23) disposed within said housing (10) and rotatable relative thereto about the rotational axis (L);
plural planetary gears (22) rotatable relative to said housing (10) about the rotational axis (L), each of said plural planetary gears (22) being configured to be revolved about its own revolving axis and to be gear-engaged with said sun gear (23);
a hollow casing (31) disposed in said housing (10) and rotatable about the rotational axis (L); and
a differential gear mechanism (30) disposed in said casing (31) and arranged inside of said sun gear (23) so as to rotate together with said casing (31) about the rotational axis (L),
said differential gear mechanism further comprising:
at least one element gear (33) disposed within said casing (31) and rotatable about its own rotational axis orthogonal to the rotational axis (L), said element gear (33) being configured to be revolvable about the rotational axis (L) together with said casing (31); and
a pair of side gears (34) rotatably disposed within said casing (31) about the rotational axis (L) and engaged with said at least one element gear (33), and plural pockets (12a) are formed in said second housing component body (12), in which said plural planetary gears (22) are disposed repectively, each of said plural pockets (12a) being configured to frictionally contact an inner peripheral surface thereof with an outer peripheral surface of said planetary gears (22), **characterised in that**
the device has an inner gear (21) disposed within said housing (10) and rotatable relative thereto about the rotational axis (L), wherein a part of said sun gear (23) is configured to be arranged inside said inner gear and said plural planetary gears (22) are disposed between said inner gear and said sun gear and gear-engaged also with said inner gear, and the hollow casing (31) is rotatable together with said inner gear.

2. A combined differential gear device according to claim 1, wherein bevel gears are used as said element gear (33) and said side gear (34).

3. A combined differential gear device according to any claim 1 or claim 2, further comprising a tapered chamfering (12b) formed on an outer peripheral surface of said housing (10).

4. A combined differential gear device according to claim 3, wherein said tapered chamfering (12b) is formed on the outer peripheral surface of said second housing component body (12) of said housing (10).

5. A combined differential gear device according to any one of claims 1 to 4, wherein said inner gear (21) is engaged with said casing (31) through a gear portion (31 c) formed thereon.

6. A combined differential gear device according to any one of claims 1 to 5,
wherein one end of said sun gear (23) is engaged with said planetary gear (22) through an outer gear portion (23a) of said sun gear (23), and the other end thereof is projected outside from said housing (10).

7. A combined differential gear device according to any one of claims 1 to 6,
wherein:
the rotational force from the engine (E) is divided through the planetary gear (22) to said inner gear (21) and said sun gear (23); and
the rotational force divided to said inner gear (21) is further divided to two parts through said differential gear mechanism (30).

8. A combined differential gear device comprising:
a hollow housing (10) composed of a first housing component body (11) and a second housing component body (12), said housing (10) being configured to be rotationally driven about a rotational axis (L) by a rotational force from an engine (E);
a sun gear (23) disposed within said housing (10) and rotatable relative to thereto about the rotational axis (L);
plural planetary gears (22) rotatable relative to said housing (10) about the rotational axis (L), each of said plural planetary gears (22) being configured to be revolved about its own revolving axis;
a hollow casing (31A) disposed in said housing (10) and rotatable together with said sun gear (23) about the rotational axis (L); and
a differential gear mechanism (30) disposed in said casing (31A) and rotatable together with said sun gear (23) and said casing (31A) about the rotational axis (L),
said differential gear mechanism (30) further comprising:
at least one element gear (33) disposed within said casing (31) and rotatable about its own rotational axis orthogonal to the rotational axis (L), said element gear (33) being configured to be revolvable about the rotational axis (L) together with said casing (31); and
a pair of side gears (34) rotatably disposed within said casing (31) about the rotational axis (L) and engaged with said at least one element gear (33), and plural pockets (11a) are formed in said first housing component body (11), in which said plural planetary gears (22) are disposed respectively, each of said plural pockets (11a) being configured to frictionally contact an inner peripheral surface thereof with an outer peripheral surface of said planetary gears (22); **characterised in that**
the device has an inner gear (21) disposed within said housing (10) and rotatable relative thereto about the rotational axis (L), wherein a part of said sun gear (23) is configured to be arranged inside said inner gear and said plural planetary gears (22) are disposed between said inner gear and said sun gear and are gear-engaged with respective of said inner gear and said sun gear.

9. A combined differential gear device according to claim 8, wherein bevel gears are used as said element gear (33) and said side gear (34).

10. A combined differential gear device according to claim 8 or claim 9, further comprising a tapered chamfering (12b) formed on an outer peripheral surface of said housing (10).

11. A combined differential gear device according to claim 10, wherein said tapered chamfering (12b) is formed on the outer peripheral surface of said second housing component body (12) of said housing (10).

12. A combined differential gear device according to any one of claims 8 to 11, further comprising a cylindrical rotation transmitting member (25) rotatably disposed in said housing (10) about the rotational axis (L), wherein one end thereof is engaged with said inner gear (21) and the other end thereof is projected outside from said housing (10).

13. A combined differential gear device according to claim 12, wherein said one end of said cylindrical rotation transmitting member (25) is engaged with said inner gear (21) through a gear portion (25a) formed onto said cylindrical rotation transmitting member (25).

14. A combined differential gear device according to claim 12 or claim 13,
wherein:
the rotational force from the engine (E) is divided through the planetary gear (22) to said inner gear (21) and said sun gear (23);
the rotational force divided to said inner gear (21) is transmitted to said cylindrical rotation transmitting member (25); and
the rotational force divided to said sun gear (23) is further divided to two parts through said differential gear mechanism (30).

## Patentansprüche

1. Kombinierte Differentialgetriebevorrichtung, umfassend:
ein hohles Gehäuse (10), das aus einem ersten Gehäusebauteilkörper (11) und einem zweiten Gehäusebauteilkörper (12) besteht, wobei das Gehäuse (10) so konfiguriert ist, dass es durch eine Drehkraft aus einem Motor (E) um eine Drehachse (L) drehbar angetrieben wird;
ein Sonnenrad (23), das im Inneren des Gehäuses (10) angeordnet ist und in Bezug auf dieses um die Drehachse (L) drehbar ist;
mehrere Planetenräder (22), die in Bezug auf das Gehäuse (10) um die Drehachse (L) drehbar sind, wobei jedes der Planetenräder (22) so konfiguriert ist, dass es um die eigene Umdrehungsachse gedreht wird und mit dem Sonnenrad (23) verzahnt ist;
eine hohle Ummantelung (31), die im Gehäuse (10) angeordnet ist und in Bezug auf dieses um die Drehachse (L) drehbar ist;
einen Differentialgetriebemechanismus (30), der in der Ummantelung (31) bereitgestellt ist und innerhalb des Sonnenrads (23) angeordnet ist, und gemeinsam mit der Ummantelung (31) um die Drehachse (L) drehbar ist;
wobei der Differentialgetriebemechanismus weiters Folgendes umfasst:
zumindest ein Elementzahnrad (33), das im Inneren der Ummantelung (31) bereitgestellt ist und um seine eigene Drehachse orthogonal zur Drehachse (L) drehbar ist, wobei das Elementrad (33) so konfiguriert ist, dass es gemeinsam mit der Ummantelung (31) um die Drehachse (L) drehbar ist;
ein Paar an Seitenzahnrädern (34), die um die Drehachse (L) drehbar im Inneren der Ummantelung (31) und im Eingriff mit dem zumindest einen Elementzahnrad (33) angeordnet sind; und
mehrere Taschen (12a), die im zweiten Gehäusebauteilkörper (12) ausgebildet sind, in denen jeweils eines der mehreren Planetenräder (22) bereitgestellt ist, wobei jede der mehreren Taschen (12a) so konfiguriert ist, dass eine Innenumfangsoberfläche selbiger mit einer Außenumfangsoberfläche der Planetenräder (22) in reibschlüssigem Kontakt ist;
**dadurch gekennzeichnet, dass** die Vorrichtung über ein Innenrad (21) verfügt, das im Inneren des Gehäuses (10) angeordnet ist und in Bezug auf dieses um die Drehachse (L) drehbar ist, worin ein Teil des Sonnenrads (23) konfiguriert ist, um innerhalb des Innenrads angeordnet zu sein, und die mehreren Planetenräder (22) zwischen dem Innenrad und dem Sonnenrad angeordnet sind und auch mit dem Innenrad verzahnt sind, und worin die hohle Ummantelung (31) gemeinsam mit dem Innenrad drehbar ist.

2. Kombinierte Differentialgetriebevorrichtung nach Anspruch 1, worin Kegelräder als das Elementzahnrad (33) und das Seitenzahnrad (34) verwendet werden.

3. Kombinierte Differentialgetriebevorrichtung nach Anspruch 1 oder 2, weiters umfassend eine kegelige Senkung (12b), die an einer Außenumfangsoberfläche des Gehäuses (10) ausgebildet ist.

4. Kombinierte Differentialgetriebevorrichtung nach Anspruch 3, worin die kegelige Senkung (12b) an der Außenumfangsoberfläche des zweiten Gehäusebauteilkörpers (12) des Gehäuses (10) ausgebildet ist.

5. Kombinierte Differentialgetriebevorrichtung nach einem der Ansprüche 1 bis 4, worin das Innenrad (21) mit dem Gehäuse (31) über einen darin ausgebildeten Zahnradabschnitt (31 c) in Eingriff ist.

6. Kombinierte Differentialgetriebevorrichtung nach einem der Ansprüche 1 bis 5, worin ein Ende des Sonnenrads (23) mit dem Planetenrad (22) über einen äußeren Zahnradabschnitt (23a) des Sonnenrads (23) in Eingriff ist und sein anderes Ende über das Gehäuse (10) nach außen vorsteht.

7. Kombinierte Differentialgetriebevorrichtung nach einem der Ansprüche 1 bis 6, worin:
die Drehkraft des Motors (E) durch das Planetenrad (22) auf das Innenrad (21) und das Sonnenrad (23) verteilt wird; und
die dem Innenrad (21) zugeteilte Drehkraft durch den Differentialgetriebemechanismus (30) erneut in zwei Teile geteilt wird.

8. Kombinierte Differentialgetriebevorrichtung, umfassend:
ein hohles Gehäuse (10), das aus einem ersten Gehäusebauteilkörper (11) und einem zweiten Gehäusebauteilkörper (12) besteht, wobei das Gehäuse (10) so konfiguriert ist, dass es durch eine Drehkraft aus einem Motor (E) um eine Drehachse (L) drehbar angetrieben wird;
ein Sonnenrad (23), das im Inneren des Gehäuses (10) angeordnet ist und in Bezug auf dieses um die Drehachse (L) drehbar ist;
mehrere Planetenräder (22), die in Bezug auf das Gehäuse (10) um die Drehachse (L) drehbar sind, wobei jedes der Planetenräder (22) so konfiguriert ist, dass es um die eigene Umdrehungsachse gedreht wird;
ein hohle Ummantelung (31A), die im Gehäuse (10) angeordnet ist und gemeinsam mit dem Sonnenrad (23) um die Drehachse (L) drehbar ist; und
einen Differentialgetriebemechanismus (30), der in der Ummantelung (31A) bereitgestellt ist und gemeinsam mit dem Sonnenrad (23) und mit der Ummantelung (31A) um die Drehachse (L) drehbar ist;
wobei der Differentialgetriebemechanismus (30) weiters Folgendes umfasst:
zumindest ein Elementzahnrad (33), das im Inneren der Ummantelung (31) bereitgestellt ist und um seine eigene Drehachse orthogonal zur Drehachse (L) drehbar ist, wobei das Elementrad (33) so konfiguriert ist, dass es gemeinsam mit der Ummantelung (31) um die Drehachse (L) drehbar ist;
ein Paar an Seitenzahnrädern (34), die um die Drehachse (L) drehbar im Inneren der Ummantelung (31) und im Eingriff mit dem zumindest einen Elementzahnrad (33) angeordnet sind; und
mehrere Taschen (11a), die im ersten Gehäusebauteilkörper (11) ausgebildet sind, in denen jeweils eines der mehreren Planetenräder (22) bereitgestellt ist, wobei jede der Taschen (11a) so konfiguriert ist, dass eine Innenumfangsoberfläche selbiger mit einer Außenumfangsoberfläche der Planetenräder (22) in reibschlüssigem Kontakt ist;
**dadurch gekennzeichnet, dass** die Vorrichtung über ein Innenrad (21) verfügt, das im Inneren des Gehäuses (10) angeordnet ist und in Bezug auf dieses um die Drehachse (L) drehbar ist, worin ein Teil des Sonnenrads (23) konfiguriert ist, um innerhalb des Innenrads angeordnet zu sein, und die mehreren Planetenräder (22) zwischen dem Innenrad und dem Sonnenrad angeordnet sind und mit dem entsprechenden aus Innenrad und Sonnenrad verzahnt sind.

9. Kombinierte Differentialgetriebevorrichtung nach Anspruch 8, worin Kegelräder als das Elementzahnrad (33) und das Seitenzahnrad (34) verwendet werden.

10. Kombinierte Differentialgetriebevorrichtung nach Anspruch 8 oder 9, weiters umfassend eine kegelige Senkung (12b), die an einer Außenumfangsoberfläche des Gehäuses (10) ausgebildet ist.

11. Kombinierte Differentialgetriebevorrichtung nach Anspruch 10, worin die kegelige Senkung (12b) an der Außenumfangsoberfläche des zweiten Gehäusebauteilkörpers (12) des Gehäuses (10) ausgebildet ist.

12. Kombinierte Differentialgetriebevorrichtung nach einem der Ansprüche 8 bis 11, weiters umfassend ein zylindrisches Drehübertragungselement (25), das um die Rotationsachse (L) drehbar im Gehäuse (10) bereitgestellt ist, worin ein Ende desselben mit dem Innenrad (21) in Eingriff ist und sein anderes Ende über das Gehäuse (10) nach außen vorsteht.

13. Kombinierte Differentialgetriebevorrichtung nach Anspruch 12, worin das eine Ende des zylindrischen Drehübertragungselements (25) über einen auf dem zylindrischen Drehübertragungselement (25) ausgebildeten Zahnradabschnitt (25a) mit dem Innenrad (21) in Eingriff ist.

14. Kombinierte Differentialgetriebevorrichtung nach Anspruch 12 oder 13, worin:
die Drehkraft des Motors (E) durch das Planetenrad (22) auf das Innenrad (21) und das Sonnenrad (23) verteilt wird;
die dem Innenrad (21) zugeteilte Drehkraft an das zylindrische Drehübertragungselement (25) übertragen wird; und
die dem Sonnenrad (21) zugeteilte Drehkraft durch den Differentialgetriebemechanismus (30) erneut in zwei Teile geteilt wird.

## Revendications

1. Un dispositif à engrenage différentiel combiné comprenant:
un boîtier creux (10) composé d'un premier corps d'élément constitutif de boîtier (11) et d'un second corps d'élément constitutif de boîtier (12), ledit boîtier (10) étant configuré pour être entraîné en rotation autour d'un axe de rotation (L) par une force de rotation en provenance d'un moteur (E);
un engrenage satellite (23) disposé à l'intérieur dudit boîtier (10) et pouvant tourner par rapport à celui-ci autour de l'axe de rotation (L);
plusieurs engrenages planétaires (22) pouvant tourner par rapport audit boîtier (10) autour de l'axe de rotation (L), chacun desdits engrenages planétaires (22) étant configuré pour être entraîné en rotation autour de son propre axe de révolution et pour être à engagement d'engrenage avec ledit engrenage satellite (23);
un carter creux (31) disposé dans ledit boîtier (10) et pouvant tourner autour de l'axe de rotation (L); et
un mécanisme à engrenage différentiel (30) disposé dans ledit carter (31) et prévu à l'intérieur dudit engrenage satellite (23) de manière à tourner en même temps que ledit carter (31) autour de l'axe de rotation (L);
ledit mécanisme à engrenage différentiel comprenant en outre:
au moins un engrenage élémentaire (33) disposé à l'intérieur dudit carter (31) et pouvant tourner autour de son propre axe de rotation orthogonal à l'axe de rotation (L), ledit engrenage élémentaire (33) étant configuré pour pouvoir tourner autour de l'axe de rotation (L) en même temps que ledit carter (31); et
une paire d'engrenages latéraux (34) disposés en rotation à l'intérieur dudit carter (31) autour de l'axe de rotation (L) et engagés avec cet au moins un engrenage élémentaire (33), et
plusieurs poches (12a) sont formées dans ledit second corps d'élément constitutifs de boîtier (12), dans lesquelles lesdits engrenages planétaires (22) sont respectivement disposés, chacune desdites poches (12a) étant configurée pour mettre en contact par friction une surface périphérique interne de celle-ci avec une surface périphérique externe desdits engrenages planétaires (22),
**caractérisé en ce que**
le dispositif comprend un engrenage interne (21) disposé à l'intérieur dudit boîtier (10) et pouvant tourner par rapport à celui-ci autour de l'axe de rotation (L), où une partie dudit engrenage satellite (23) est configurée pour être disposée à l'intérieur dudit engrenage interne et dans lequel lesdits engrenages planétaires (22) sont disposés entre ledit engrenage interne et ledit engrenage satellite et engagés par engrenage également avec ledit engrenage interne, le carter creux (31) étant amené à tourner en même temps que ledit engrenage interne.

2. Un dispositif à engrenage différentiel combiné selon la revendication 1, dans lequel des engrenages coniques sont utilisés pour ledit engrenage élémentaire (33) et ledit engrenage latéral (34).

3. Un dispositif à engrenage différentiel combiné selon l'une quelconque des revendications 1 ou 2, comprenant en outre un chanfreinage tronconique (12b) formé sur une surface périphérique externe dudit boîtier (10).

4. Un dispositif à engrenage différentiel combiné selon la revendication 3, dans lequel ledit chanfreinage tronconique (12b) est formé sur la surface périphérique externe dudit second corps d'élément constitutif de boîtier (12) dudit boîtier (10).

5. Un dispositif à engrenage différentiel combiné selon l'une quelconque des revendications 1 à 4, dans lequel ledit engrenage interne (21) est engagé avec ledit carter (31) par l'intermédiaire d'une partie d'engrenage (31c) formée dessus.

6. Un dispositif à engrenage différentiel combiné selon l'une quelconque des revendications 1 à 5, dans lequel une première extrémité dudit engrenage satellite (23) est engagée avec ledit engrenage planétaire (22) par l'intermédiaire d'une partie d'engrenage externe (23a) dudit engrenage planétaire (23), l'autre extrémité de celui-ci faisant saillie à l'extérieur dudit boîtier (10).

7. Un dispositif à engrenage différentiel combiné selon l'une quelconque des revendications 1 à 6, dans lequel:
la force de rotation en provenance du moteur (E) est divisée par l'intermédiaire de l'engrenage planétaire (22) vers ledit engrenage interne (21) et vers ledit engrenage satellite (23); et
la force de rotation divisée vers ledit engrenage interne (21) est en outre divisée en deux parties par l'intermédiaire dudit mécanisme à engrenage différentiel (30).

8. Un dispositif à engrenage différentiel combiné comprenant:
un boîtier creux (10) composé d'un premier corps d'élément constitutif de boîtier (11) et d'un second corps d'élément constitutif de boîtier (12), ledit boîtier (10) étant configuré pour être entraîné en rotation autour d'un axe de rotation (L) par une force de rotation en provenance d'un moteur (E);
un engrenage satellite (23) disposé à l'intérieur dudit boîtier (10) et pouvant tourner par rapport à celui-ci autour de l'axe de rotation (L);
plusieurs engrenages planétaires (22) pouvant tourner par rapport audit boîtier (10) autour de l'axe de rotation (L), chacun desdits engrenages planétaires (22) étant configuré pour être entraîné en rotation autour de son propre axe de révolution;
un carter creux (31A) disposé dans ledit boîtier (10) et pouvant tourner en même temps que ledit engrenage satellite (23) autour de l'axe de rotation (L); et
un mécanisme à engrenage différentiel (30) disposé dans ledit carter (31A) et pouvant tourner en même temps que ledit engrenage planétaire (23) et ledit carter (31A) autour de l'axe de rotation (L), ledit mécanisme à engrenage différentiel (30) comprenant en outre:
au moins un engrenage élémentaire (33) disposé à l'intérieur dudit carter (31) et pouvant tourner autour de son propre axe de rotation orthogonal à l'axe de rotation (L), ledit engrenage élémentaire (33) étant configuré pour pouvoir tourner autour de l'axe de rotation (L) en même temps que ledit carter (31); et
une paire d'engrenages latéraux (34) disposés en rotation à l'intérieur dudit carter (31) autour de l'axe de rotation (L) et engagés avec cet au moins un engrenage élémentaire (33), et
plusieurs poches (12a) sont formées dans ledit premier corps d'élément constitutif de boîtier (11), dans lequelles lesdits engrenages planétaires (22) sont respectivement disposés, chacune desdites poches (11a) étant configurée pour mettre en contact par friction une surface périphérique interne de celle-ci avec une surface périphérique externe desdits engrenages planétaires (22);
**caractérisé en ce que**
le dispositif comprend un engrenage interne (21) disposé à l'intérieur dudit boîtier (10) et pouvant tourner par rapport à celui-ci autour de l'axe de rotation (L), où une partie dudit engrenage satellite (23) est configurée pour être disposée à l'intérieur dudit engrenage interne et dans lequel lesdits engrenages planétaires (22) sont disposés entre ledit engrenage interne et ledit engrenage satellite et sont engagés par engrenage avec un engrenage respectif parmi ledit engrenage interne et ledit engrenage satellite.

9. Un dispositif à engrenage différentiel combiné selon la revendication 8, dans lequel des engrenages biseautés sont utilisés pour ledit engrenage élémentaire (33) et ledit engrenage latéral (34).

10. Un dispositif à engrenage différentiel combiné selon la revendication 8 ou la revendication 9, comprenant en outre un chanfreinage tronconique (12b) formé sur une surface périphérique externe dudit boîtier (10).

11. Un dispositif à engrenage différentiel combiné selon la revendication 10, dans lequel ledit chanfreinage tronconique (12b) est formé sur la surface périphérique externe dudit second corps d'élément constitutif de boîtier (12) dudit boîtier (10).

12. Un dispositif à engrenage différentiel combiné selon l'une quelconque des revendications 8 à 11, comprenant en outre un élément cylindrique de transmission de rotation (25) disposé à rotation dans ledit boîtier (10) autour de l'axe de rotation (L), où une première extrémité de celui-ci est engagée avec ledit engrenage interne (21) et l'autre extrémité de celui-ci fait saillie à l'extérieur dudit boîtier (10).

13. Un dispositif à engrenage différentiel combiné selon la revendication 12, dans lequel ladite première extrémité dudit élément cylindrique de transmission de rotation (25) est engagée avec ledit engrenage interne (21) par l'intermédiaire d'une partie d'engrenage (25a) formée sur ledit élément cylindrique de transmission de rotation (25).

14. Un dispositif à engrenage différentiel combiné selon la revendication 12 ou la revendication 13, dans lequel:
la force de rotation en provenance du moteur (E) est divisée par l'intermédiaire de l'engrenage planétaire (22) vers ledit engrenage interne (21) et vers ledit engrenage satellite (23);
la force de rotation divisée vers ledit engrenage interne (21) est transmise audit élément cylindrique de transmission de rotation (25); et
la force de rotation divisée vers ledit engrenage satellite (23) est encore divisée en deux parties par l'intermédiaire dudit mécanisme d'engrenage différentiel (30).
